# FASCICULE DE BREVET EUROPEEN

(11) **EP 0 823 987 B1**
(45) Date de publication et mention de la délivrance du brevet: **19.07.2000**
(21) Numéro de dépôt: 97401937.4
(22) Date de dépôt: 14.08.1997
(51) Int. Cl.: A01G 9/12, A01G 17/06

(54) **Tuteur et ensemble ornementaux pour descentes de gouttières**
Ornamentale Stütze und Anlage für Fallrohre
Ornamental stake and arrangement for down pipes

(30) Priorité: 14.08.1996 FR 9610196
(43) Date de publication de la demande: 18.02.1998
(73) Titulaire: Gillet, Roger, 91240 Saint Michel sur Orge (FR)
(72) Inventeur: Gillet, Roger, 91240 Saint Michel sur Orge (FR)
(74) Mandataire: Pontet, Bernard

(56) Documents cités:
- EP-B- 0 135 698
- DE-A- 3 329 035
- DE-U- 8 626 353
- DE-U- 8 914 479
- DE-U- 9 013 806
- GB-A- 2 264 032
- US-A- 5 220 744
- US-A- 5 524 382

## Description

La présente invention concerne un tuteur ornemental pour plantes grimpantes et pour masquer les descentes de gouttières.

La présente invention concerne également un ensemble ornemental comprenant au moins un tel tuteur et un bac à plantes approprié.

Il existe des treillages en bois ou en plastique, en fer, qui s'appliquent sur les façades des maisons ou sur des murs de clôtures pour servir de tuteur et de soutien aux plantes grimpantes.

Ces treillages sont fixés sur le revêtement ou crépi par des chevilles ou vis nécessitant de faire des trous au préalable dans le revêtement ou crépi pour y introduire des chevilles. Ces travaux sont fastidieux, notamment pour les personnes peu bricoleuses, et provoquent des inconvénients en particulier l'éclatement des enduits, des défauts d'étanchéité, etc. Le DE-A-33 29 035 décrit un tel treillage comprenant deux fils longitudinaux rapprochés le long desquels on peut régler la position d'un support destiné à la fixation du treillage sur un bâtiment.

Par ailleurs, les descentes de gouttière sont particulièrement inesthétiques sur les façades de bâtiment.

Le US-A-5 220 744 décrit un tuteur pour plantes destiné à être fixé sur une descente de gouttières. Il comprend deux supports d'extrémité que l'installateur doit fixer à distance l'un de l'autre le long de la descente, et un fil qu'il faut ensuite faire passer alternativement sur ces deux supports pour former un treillage entre eux. Ce montage est complexe.

La présente invention a pour but de remédier à certains au moins de ces inconvénients et plus particulièrement de proposer un tuteur ornemental pour plantes grimpantes permettant de cacher les descentes de gouttière des maisons d'habitation et immeubles.

Suivant un premier aspect de l'invention, le tuteur ornemental montant pour palisser des plantes grimpantes et cacher une descente de gouttières, comprenant un treillage et des moyens de fixation du treillage à la descente de gouttière, est caractérisé en ce que le treillage a un profil qui est d'une manière générale incurvé ouvert pour coiffer la descente de gouttière, et est rigide de façon à être autoportant et de forme stable pendant le stockage, la manipulation et le montage.

Ceci n'exclut pas que le treillage soit déformable de manière permanente par exemple par la personne effectuant le montage, par exemple pour adapter la courbure du profil à un cas particulier d'installation.

Différents moyens de fixation peuvent être utilisés. Par exemple, le tuteur peut comporter au moins un collier élastique ouvert qui se met en place sur la descente de gouttière par simple pression du tuteur sur la descente de gouttière. Ce collier a un diamètre intérieur adapté au diamètre des descentes de gouttière.

Le tuteur permet aux plantes grimpantes de se développer en formant une couverture par-dessus les descentes de gouttières, donc de dissimuler les descentes sans pour autant toucher le crépi de la façade. On évite ainsi les détériorations et le salissement.

Le tuteur peut couvrir tout ou partie de la hauteur de la descente de gouttière selon le choix de l'utilisateur. Il n'est pas limité dans ses dimensions. Il est commode que le tuteur soit modulaire, plusieurs tuteurs pouvant être alignés le long de la gouttière. Ceci facilite la fabrication, le montage, ainsi que le stockage et la manipulation avant le montage.

Il peut être réalisé en matériaux divers : plastique, bois, fer et autres. Sa forme est polygonale ou en demi-lune, ou tout autre profil général incurvé propre à couvrir la gouttière pour les regards venant de face ou de chaque côté.

Suivant un second aspect de l'invention, l'ensemble ornemental est caractérisé en ce qu'il comprend au moins un tuteur selon le premier aspect et un bac ou contenant dont la forme épouse la descente de gouttière.

Le bac ou contenant, qui épouse la forme de la descente de gouttière en partie basse, repose sur le sol et sert à mettre en culture les plantes grimpantes qui se développent sur le tuteur.

Ce bac ou contenant est notamment utile lorsque le sol est bétonné ou dallé à la base de la façade.

L'invention consiste donc en particulier en un tuteur ornemental en treillage rigide formant des mailles, montant à la verticale parallèlement à une descente de gouttière et venant habiller celle-ci. De préférence, le tuteur déborde largement de chaque côté de la gouttière vue de face, pour donner suffisamment de place en largeur aux plantes grimpantes. Les plantes viennent s'entrelacer dans les mailles du tuteur et cachent ainsi la descente de gouttières.

D'autre particularités et avantages de l'invention ressortiront encore de la description ci-après, relative à un mode de réalisation non-limitatif.

Aux dessins annexés :
- la figure 1 est une vue de face d'un tuteur selon l'invention;
- la figure 2 est une vue en coupe transversale du tuteur monté sur une gouttière le long d'une façade;
- la figure 3 est une vue du détail III de la figure 2, à échelle agrandie;
- les figures 4 et 5 sont des vues de l'ensemble ornemental installé, de profil et en perspective respectivement; et
- la figure 6 est un détail en perspective montrant le bac et la base du tuteur en position de service.

Le tuteur 1 est réalisé en treillage de fils d'acier pouvant être peints, comprenant des fils d'acier longitudinaux 2 qui s'étendent en service dans le sens de la hauteur et sont d'un diamètre inférieur à des fils transversaux 3. Les fils transversaux 3 sont pliés selon le profil général incurvé voulu pour le tuteur et donnent une meilleure résistance et rigidité au tuteur, tout en définissant avec les fils longitudinaux 2 des mailles rectangulaires 4.

Dans l'exemple représenté, le profil général incurvé et le pliage correspondant des fils transversaux aboutit à une structure à cinq faces planes avec un angle de pliage a=140° à chaque arête. Il y a un fil longitudinal 2 le long de chaque arête. Mais il peut y avoir plus ou moins d'arêtes et de faces, ou encore le profil peut être en segment de cercle ou d'ovale.

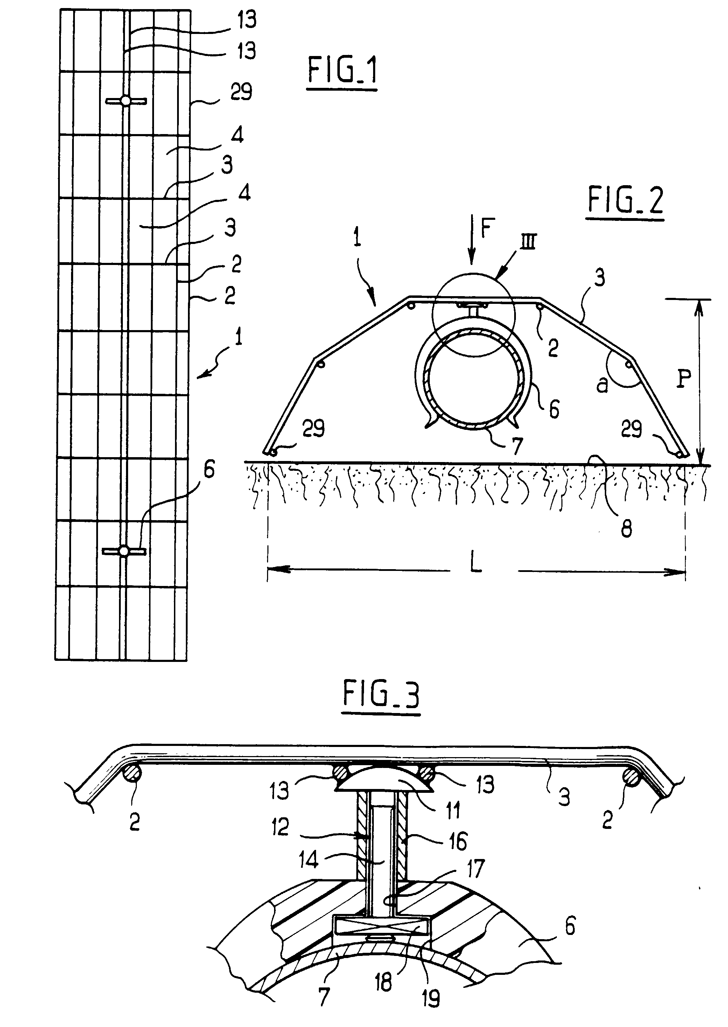

Le treillage porte sur son côté concave deux colliers élastiques 6 ouverts du côté opposé au treillage. Les colliers 6 peuvent s'engager sur la descente de gouttière 7 par simple pression horizontale F (figure 2) exercée sur le treillage en direction de la façade 8. De tels colliers, ayant un diamètre intérieur correspondant au diamètre usuel (80, 100 ou 110 mm) des descentes de gouttière, sont disponibles dans le commerce, par exemple sous la marque "NICOLL". Pour la fixation du collier au treillage, la tête 11 d'une vis 12 (figure 3) est soudée à deux fils longitudinaux 13 du treillage qui sont rapprochés l'un de l'autre de part et d'autre de l'axe vertical médian du treillage. La tige 14 de la vis traverse une entretoise tubulaire 16 appuyée contre la tête de la vis et un trou central 17 du collier.

Un écrou 18 emprisonné dans un évidement de forme correspondante 19 de la paroi intérieure du collier 6 serre le collier 6 et l'entretoise tubulaire 16 entre l'écrou 18 et la tête 11.

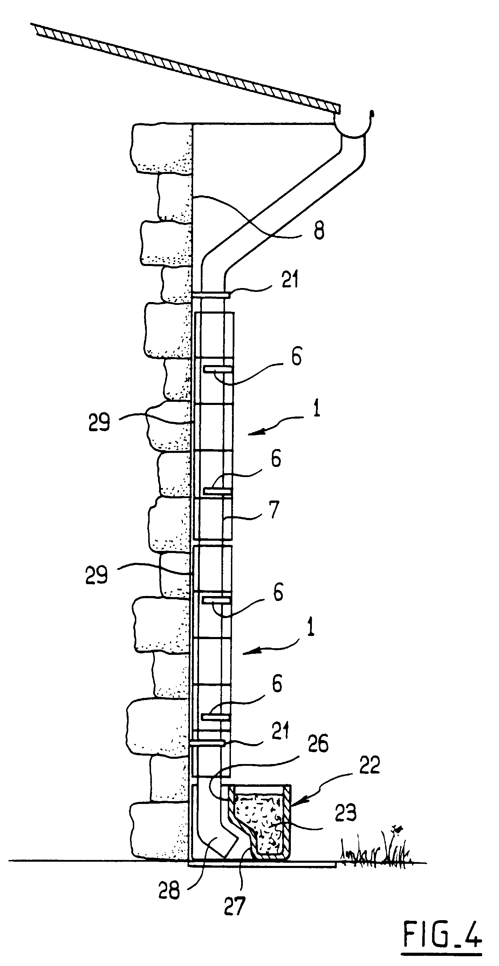

Comme le montre plus particulièrement la figure 4, le tuteur 1 peut être modulaire, et il y a par exemple, comme représenté, deux tuteurs 1 montés alignés l'un au-dessus de l'autre le long de la descente de gouttière 7. Chaque tuteur 1 est monté indépendamment de l'autre sur la descente de gouttière 7 grâce à ses deux colliers élastiques 6. Ainsi, une seule longueur de tuteur, relativement modérée, par exemple de l'ordre de 1 mètre, suffit pour toutes les applications.

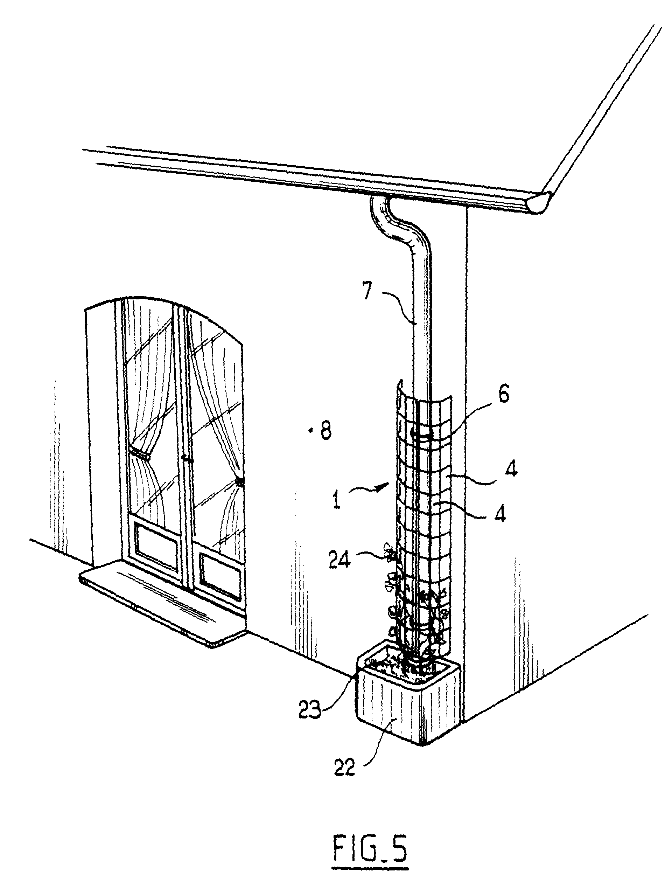

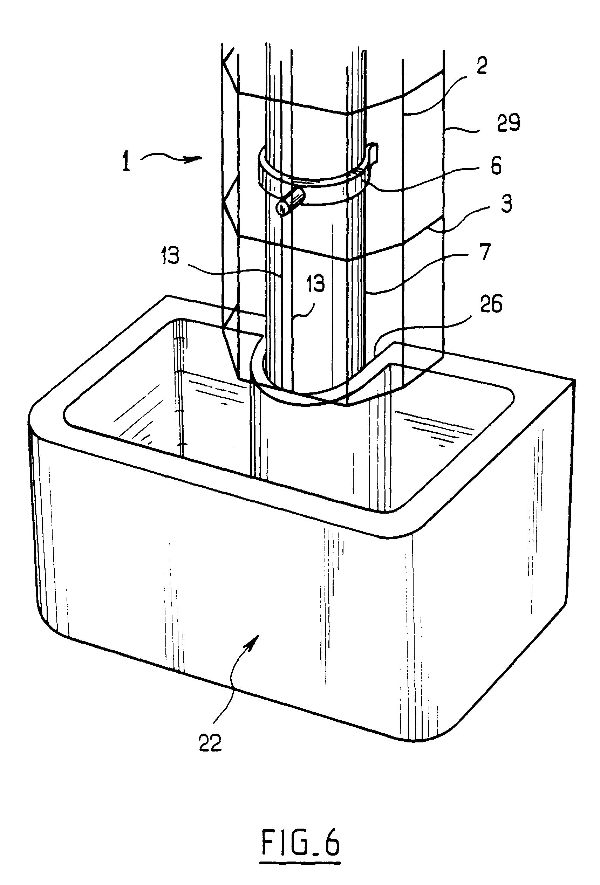

La figure 4 montre également que les tuteurs 1 peuvent sans aucune difficulté d'installation coiffer latéralement la descente de gouttière 7. Aucune gêne n'est créée par les colliers de fixation pré-existants 21 qui rattachent la descente de gouttière 7 à la façade 8. Au montage, on s'arrange pour placer les colliers élastiques 6 en position décalée longitudinalement par rapport aux colliers pré-existants 21. Comme le montrent les figures 4 à 6, le tuteur 1 se combine avantageusement avec un bac 22 pour former un ensemble ornemental d'habillage des descentes de gouttières. Le bac 22 est destiné à contenir le milieu végétal 23 nécessaire à la croissance de la plante grimpante 24 (figure 5), notamment dans le cas où le sol est dallé ou cimenté à la base de la façade 8. Le bac 22 présente dans toute la hauteur de sa face arrière un évidement 26 destiné à recevoir la partie basse de la descente de gouttière 7. De préférence, la profondeur de l'évidement 26 en direction de l'avant du bac est augmentée dans une région 27 (figure 4) partant de la base du bac pour recevoir un éventuel tronçon inférieur coudé 28 de la descente 7.

Pour le montage, on pose le bac 22 sur le sol dans une position où il entoure la descente de gouttière 7, avec la partie non évidée de la face arrière du bac appuyée ou sensiblement appuyée contre la façade 8.

Ensuite ou avant cela, on place le ou les tuteurs 1 sur la descente 7, le maintien des tuteurs 1 étant indépendant du bac.

A titre d'exemple, le bac peut avoir une forme carrée d'environ 35 à 40 cm de côté et sa hauteur peut varier de 25 à 40 cm par exemple. L'évidement 26 peut avoir une largeur d'environ 120 mm et une profondeur qui est d'environ 150 mm en haut et 250 mm en bas.

Dans le mode de réalisation préféré qui est représenté, le tuteur vu de face déborde largement de chaque côté de la descente 7 pour que la plante 24 ait de la place en largeur pour se développer, et aussi pour l'équilibre esthétique de l'arrangement végétal obtenu.

Les bords latéraux 29 du tuteur 1 ne touchent pas la façade 8.

A titre d'exemple, pour une descente de gouttière de diamètre 80 mm, le tuteur 1 a une largeur L (figure 2) d'environ 350 mm, et donc un dépassement d'environ 135 mm de chaque côté de la descente, et une profondeur P d'environ 120 mm. La distance entre le treillage du tuteur et la descente de gouttière correspond à l'épaisseur requise pour le passage du collier élastique et sa fixation au treillage le long de l'axe vertical médian de celui-ci.

Le tuteur et l'ensemble ornemental qui viennent d'être décrits sont particulièrement simples à fabriquer, à commercialiser et à mettre en place par l'utilisateur sans provoquer la moindre dégradation sur le bâtiment.

L'utilisateur peut déplacer le tuteur, ou le retirer sans qu'il reste de trace sur le bâtiment.

Bien entendu, l'invention n'est pas limitée à l'exemple décrit et représenté.

Le tuteur pourrait être réalisé avec un maillage en matière plastique ou autres matériaux appropriés.

On pourrait prévoir un tuteur sensiblement en forme de quart de cercle ou de trois quarts de cercle pour les gouttières placées en angle concave ou convexe de façade.

Les colliers élastiques au lieu d'être fixés au maillage comme cela a été décrit, peuvent être retenus de manière coulissante le long des deux fils 13 servant alors de rail de réglage.

## Revendications

1. Tuteur ornemental montant (1) pour palisser des plantes grimpantes (24) et cacher une descente de gouttières (7), comprenant un treillage (2, 3) et des moyens (6) de fixation du treillage à la descente de gouttière, caractérisé en ce que le treillage a un profil qui est d'une manière générale incurvé ouvert pour coiffer la descente de gouttière, et est rigide de façon à être auto-portant et de forme stable pendant le stockage, la manipulation et le montage.

2. Tuteur selon la revendication 1, caractérisé en ce que le treillage (2, 3) est réalisé en fils d'acier.

3. Tuteur selon la revendication 1 ou 2, caractérisé en ce que les moyens (6) de fixation à la descente de gouttière (7) sont de type rapide.

4. Tuteur selon l'une quelconque des revendications 1 à 3, caractérisé en ce que le treillage comprend deux fils longitudinaux (13) rapprochés au milieu servant de rail de fixation et de positionnement pour les moyens (6) de fixation du tuteur (1) sur la descente de gouttière (7).

5. Tuteur selon l'une des revendications 1 à 4, caractérisé en ce qu'il est uniquement fixé sur la descente de gouttière (7).

6. Tuteur selon la revendication 4 ou 5, caractérisé en ce que les moyens de fixation du tuteur comprennent au moins un collier élastique ouvert engageable autour de la descente de gouttière (7) par simple pression (F).

7. Tuteur selon l'une des revendications 1 à 6, caractérisé en ce que ses côtés ne touchent pas la façade (8) lorsqu'il est monté sur la descente de gouttière (7) .

8. Tuteur selon l'une des revendications 1 à 7, caractérisé en ce qu'il déborde de chaque côté de la descente de gouttière (7) lorsqu'il est monté sur la descente de gouttière.

9. Tuteur selon l'une des revendications 1 à 8, caractérisé en ce qu'il est modulaire, au moins deux tuteurs identiques (1) pouvant être alignés le long d'une même descente (7).

10. Tuteur selon l'une quelconque des revendication 1 à 9, caractérisé en ce que le tuteur est agencé pour coiffer la descente de gouttière, en la dissimulant de face et latéralement.

11. Tuteur selon l'une quelconque des revendications 1 à 10, caractérisé en ce que le treillage a un profil sensiblement en demi-lune ou analogue enveloppant les faces frontale et latérales de la gouttière.

12. Ensemble ornemental caractérisé en ce qu'il comprend au moins un tuteur (1) selon l'une des revendications 1 à 11, et un bac ou contenant (22) dont la forme épouse la descente de gouttière (7).

13. Ensemble selon la revendication 12, caractérisé en ce qu'une face arrière du bac comprend un évidement (26) dont la profondeur mesurée vers l'avant du bac est accrue au voisinage du bas du bac.

## Patentansprüche

1. Vertikale Zierstütze (1) zum Hochziehen von Kletterpflanzen (24) und Abdecken eines Dachrinnenablaufs (7), mit einem Gitterwerk (2, 3) und Mitteln (6) zur Befestigung des Gitterwerks an dem Dachrinnenablauf, **dadurch gekennzeichnet, dass** das Gitterwerk ein Profil aufweist, das in einer allgemeinen Form gekrümmt offen zur Überdeckung des Dachrinnenablaufs ist und das selbsttragend steif und während der Lagerung, der Handhabung und der Montage formstabil ist.

2. Zierstütze nach Anspruch 1, **dadurch gekennzeichnet, dass** das Gitterwerk (2, 3) aus einem Stahldraht gebildet ist.

3. Zierstütze nach Anspruch 1 oder 2, **dadurch gekennzeichnet, dass** die Mittel (6) zur Befestigung an dem Dachablauf Schnellbefestigungsmittel sind.

4. Zierstütze nach einem der Ansprüche 1 bis 3, **dadurch gekennzeichnet, dass** das Gitterwerk zwei longitudinale Drähte (13) in der Nähe der Mitte aufweist, die als Befestigungs- und Positionierungsschiene für die Mittel (6) zur Befestigung der Zierstütze (1) auf dem Dachrinnenablauf (7) dienen.

5. Zierstütze nach einem der Ansprüche 1 bis 4, **dadurch gekennzeichnet, dass** sie nur an dem Dachrinnenablauf (7) befestigt ist.

6. Zierstütze nach Anspruch 4 oder 5, **dadurch gekennzeichnet, dass** die Mittel zur Befestigung der Stütze wenigstens eine elastische offene Schelle umfassen, die durch einen einfachen Druck den Dachrinnenablauf (7) umfassen kann.

7. Zierstütze nach einem der Ansprüche 1 bis 6, **dadurch gekennzeichnet, dass** ihre Ränder nicht die Fassade (8) berühren, wenn sie an dem Dachrinnenablauf(7)befestigt ist.

8. Zierstütze nach einem der Ansprüche 1 bis 7, **dadurch gekennzeichnet, dass** sie jede Seite des Dachrinnenablaufs (7) überragt, wenn sie an dem Dachrinnenablauf (7) befestigt ist.

9. Zierstütze nach einem der Ansprüche 1 bis 8, **dadurch gekennzeichnet, dass** sie modular ausgebildet ist, indem wenigstens zwei identische Stützen (1) entlang dem selben Ablauf (7) ausrichtbar sind.

10. Zierstütze nach einem der Ansprüche 1 bis 9, **dadurch gekennzeichnet, dass** die Stütze zum Überdecken des Dachrinnenablaufs ausgebildet ist, indem sie ihn vorn und seitlich verdeckt.

11. Zierstütze nach einem der Ansprüche 1 bis 10, **dadurch gekennzeichnet, dass** das Gitterwerk ein im Wesentlichen halbmondförmiges oder ähnliches Profil aufweist, das die Vorder- und Seitenflächen des Dachrinnenablaufs (7) umhüllt.

12. Zieranordnung, **dadurch gekennzeichnet, dass** sie wenigstens eine Stütze (1) nach einem der Ansprüche 1 bis 11 und einen Bottich oder Behälter (22) aufweist, dessen Form an den Dachrinnenablauf (7) angepasst ist.

13. Zieranordnung nach Anspruch 12, **dadurch gekennzeichnet, dass** eine Rückseite des Bottichs eine Ausnehmung (26) aufweist, deren zur Vorderseite des Bottichs hin gemessene Tiefe in der Nähe der Unterseite des Bottichs zugenommen hat.

## Claims

1. Upright ornamental support (1) to support climbing plants (24) and to hide a gutter downpipe (7), comprising trellis work (2, 3) and means (6) of fixing the trellis work to the gutter downpipe, characterized in that the trellis work has a profile which is generally open and curved inwards in order to cover the gutter downpipe, and is rigid so as to be self-supporting and of a stable shape during storage, handling and assembly.

2. Support according to claim 1, characterized in that the trellis work (2, 3) is produced in steel wire.

3. Support according to claim 1 or 2, characterized in that the means (6) of fixing to the gutter downpipe (7) are of rapid type.

4. Support according to any one of claims 1 to 3, characterized in that the trellis work comprises two closely-aligned longitudinal wires (13) in the middle serving as the fixing and positioning rail for the means (6) of fixing the support (1) onto the gutter downpipe (7).

5. Support according to one of claims 1 to 4, characterized in that it is solely fixed onto the gutter downpipe (7).

6. Support according to claim 4 or 5, characterized in that the means of fixing the support comprise at least one open flexible clip which can be engaged around the gutter downpipe (7) by simple pressure (F).

7. Support according to one of claims 1 to 6, characterized in that its sides do not touch the facade (8) of the building when it is mounted onto the gutter downpipe (7).

8. Support according to one of claims 1 to 7, characterized in that it extends beyond each side of the gutter downpipe (7) when it is mounted onto the gutter downpipe.

9. Support according to one of claims 1 to 8, characterized in that it is modular, at least two identical supports (1) being able to be aligned along the same downpipe (7).

10. Support according to any one of claims 1 to 9, characterized in that the support is arranged so as to cover the gutter downpipe, by concealing the front and sides.

11. Support according to any one of claims 1 to 10, characterized in that the trellis work has a profile which is approximately half-moon shape or similar which wraps around the front and side surfaces of the gutter.

12. Ornamental assembly characterized in that it comprises at least one support (1) according to one of claims 1 to 11 and a tub or container (22) the shape of which fits the gutter downpipe (7).

13. Assembly according to claim 12, characterized in that the rear face of the tub is provided with a recess (26) the depth of which measured towards the front of the tub is increased near to the bottom of the tub.
